# EUROPEAN PATENT SPECIFICATION

(11) **EP 1 011 898 B1**
(45) Date of publication and mention of the grant of the patent: **02.07.2003**
(21) Application number: 98948047.0
(22) Date of filing: 08.10.1998
(51) Int. Cl.: B22D 17/00, B29C 45/00

(54) **A METHOD AND A DEVICE FOR MOLDING OBJECTS**
VERFAHREN UND VORRICHTUNG ZUM FORMEN GEGENSTÄNDE
PROCEDE ET DISPOSITIF DE MOULAGE D'OBJETS

(30) Priority: 13.10.1997 SE 9703709
(43) Date of publication of application: 28.06.2000
(73) Proprietor: Flow Holdings GmbH (SAGL) Limited Liability Company, 6919 Carabietta (CH)
(72) Inventor: BERGMAN, Carl, S-723 41 Väster s (SE)
(74) Representative: Henningsson, Gunnar
(86) International application number: PCT/SE98/01812
(87) International publication number: WO 99/019099

(56) References cited:
- EP-A2- 0 354 017
- SE-B- 435 243
- DERWENT'S ABSTRACT, No. 84-268966/43, week 8443; & SU 1079353 A (MOSC AUTOMECH INST) 15 March 1984.

## Description

### FIELD OF THE INVENTION AND PRIOR ART

The present invention relates to a device for molding objects, which comprises a mould having a molding space enclosed therein and adapted to be filled by a fluid mold material intended to solidify therein as well as members adapted to supply said molding material under a pressure being high with respect to the atmospheric pressure to the molding space for solidification thereof under this high pressure, as well as a method according to the preamble of the appended independent method claim.

It is known that it is possible to obtain objects having considerably improved physical properties if they are produced by molding and the mold material is allowed to solidify from a molten state under a high pressure. This is for example the case in molding objects of different plastics, such as polyethene, in which the improved physical properties are then obtained by the fact that the high pressure to which the molten plastic is excerted brings the molecule chains to be straightened, so that the solidified plastic gets stronger. When molding or casting metals while exposing the molten metal or the metal alloy to high pressures so-called "shrinkages" in the casting may be pressed out, which increase the strength and the life time of the object formed in this way substantially.

It is pointed out that "fluid mold material" here is to be given a very broad sense and comprises very thinly fluid as well as more viscous, paste-like material.

Typical pressures for molding of this type are 5 000 bars or higher, but this information is not at all to be interpreted as limiting the invention. It is in practice impossible to construct a mould for molding an object being pretty much complicated, which may withstand pressures of the order mentioned here during many molding cycles, so it has until now been necessary to accept causing of unreasonably high costs should a molding take place under the conditions mentioned above, so that such a process for manufacturing the objects in question has not been commercially interesting in case it is desired to produce the same detail a greater number of times.

### SUMMARY OF THE INVENTION

The object of the present invention is to provide a device and a method of the type defined in the introduction, which find a remedy to the inconveniences mentioned above of such methods and devices known and described above and make it possible to mold objects while the mold material solidifies under a high pressure in a way being attractive from the economical point of view while obtaining objects of high quality.

This object is according to the invention obtained by providing such a device additionally with a chamber adapted to receive the mould during the molding and means adapted to generate a high pressure of substantially the same magnitude as the pressure excerted to the molding material during the very molding for a medium filling the chamber so as to isostatically substantially balance the mould through the molding material and said forces acting upon said medium, as well as a method according to the appended independent method claim.

By isostatically balancing the mould in this way the material of the mould has not to be particularly high resistant even if more complicated details are to be mold, in order to ensure that the mould may withstand molding at very high pressures during the solidification of the mold material from a molten state in many cycles. Thus, it will be possible to produce objects of materials having very good strength properties in comparatively large series without for that sake destroying the mould used.

According to a preferred embodiment of the invention the device comprises members adapted to register the pressure in the molding space of the mould during the molding and control said means to adjust the pressure of the medium in the chamber depending upon the pressure in the molding space of the mould. It may in this way be ensured that the pressure of the medium in the chamber is always such that the mould is continuously substantially isostatically balanced independent of changes of the pressure to which the mold material is exposed in the mould when it solidifies from the molten state.

According to another preferred embodiment of the invention the mould is formed by a plurality of separable parts, and said means are adapted to generate a pressure of said medium in the chamber, which is slightly higher than the pressure of the molding material in the molding space during the molding, so as to support a sticking of said parts of the mould to each other during the molding. By choosing a somewhat higher pressure of said medium than the pressure to which the mold material is exposed in the mould said medium may in this way be utilised so as to assist in keeping the parts of the mould together during the molding, so that this is ensured in a very reliable way.

According to another preferred embodiment of the invention said means are adapted to supply the plastic material in molten state under said high pressure to the molding space. This is particularly advantageous, since a molding of objects of plastic while utilising said high pressure results in a straightening of the molecule chains of the plastic before the solidification, which involves substantially improved physical properties with respect to a solidification of such a plastic with molecule chains being not straightened out.

According to another preferred embodiment of the invention said means are adapted to feed said mold material into the molding space of the mould under a pressure exceeding 5 000 bars. It has turned out that mold material exposed to pressure exceeding 5 000 bars during the solidification from a molten state receives very good physical properties.

According to another preferred embodiment of the invention said means are adapted to feed a metal or a metal alloy in molten state to the molding space of the mould under a high pressure for molding an object. A molding of objects of metal or metal alloys while pressing so-called "shrinkages" out from the casting for obtaining high resistant objects is by this made possible.

According to another preferred embodiment of the invention the device comprises an arrangement adapted to control the temperature of the mold material supplied under high pressure to the molding space of the mould in function of the time said mold material has been located in said mold space. An adaption of the very solidification process to the material used and to the pressures it is exposed to is in this way enabled for achieving physical properties of the casting being the best possible.

According to another preferred embodiment of the invention, which constitutes a further development of the previous embodiment, the arrangement has means for directly or indirectly heating the mould for prolonging the time said mold material is present in the molding space before the molding thereof to said object takes place. This may be of a particular advantage should for example a plastic material having molecule chains requiring a comparatively long time for being straightened out be used as mold material. Perhaps is no such prolongation necessary for some materials and said heating will then be omitted.

Further advantages as well as advantageous characteristics of the invention appear from the following description and the other dependent claims.

### BRIEF DESCRIPTION OF THE DRAWING

With reference to the appended drawing, below follows a description of a preferred embodiment of the invention cited as an example.

### In the drawing:

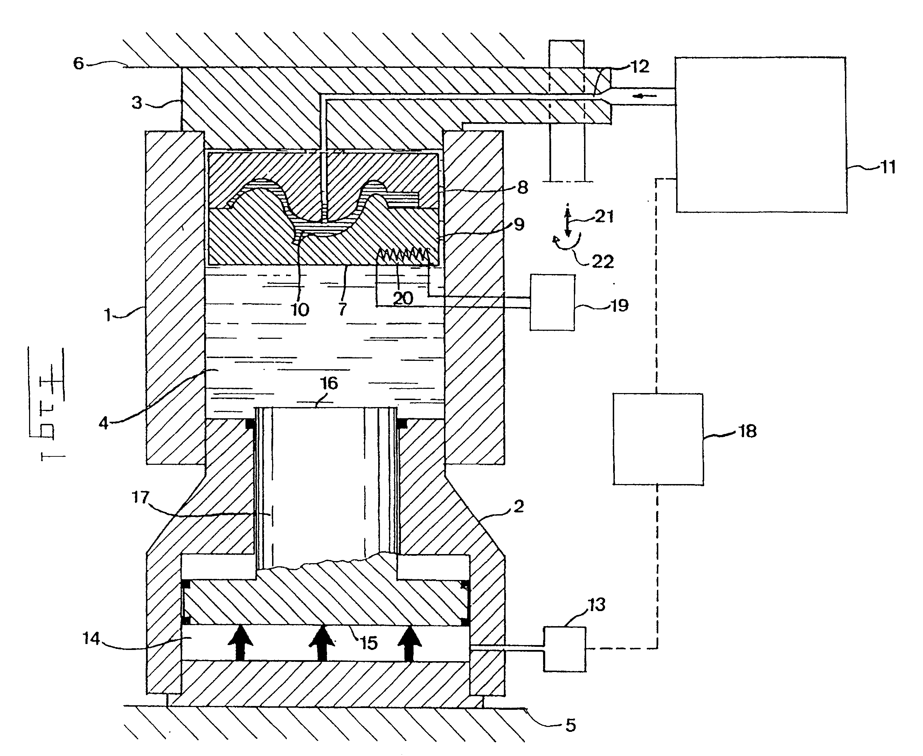

The only fig 1 is a simplified partly sectioned view of a device according to a preferred embodiment of invention, through which also the method according to the invention for molding objects may be described.

### DETAILED DESCRIPTION OF A PREFERRED EMBODIMENT OF THE INVENTION

The construction of a device for molding objects according to a preferred embodiment of the invention is very schematically illustrated in fig 1, in which only parts of the device having something to do with the invention are shown for the sake of simplicity. The device has a pressure chamber 4 sealingly delimited by lateral walls 1, which may form a cylindrical or another arbitrary shape, as well as lower 2 and upper 3 lids. The two lids are kept in place through lower and upper, respectively, press tables indicated at 5 and 6. For being able to resist the high pressure prevailing a press frame acting upon the press tables for keeping the lids in place and not shown has usually a powerful reinforcement by many windings of music wires under a high pretension. Furthermore, the device comprises a mould 7, which here is formed by two parts 8, 9 mutually separable, but just as well may be one single piece or more pieces than two. The mould has a molding space 10 enclosed therein, which has the shape to be given an object mold therein.

The device has also means 11 adapted to supply said mold material under a pressure being high with respect to the atmospheric pressure to the molding space 10. These means are here formed by a so-called injector with an ability to spray the mold material in liquid state under a pressure of about 6 000 bars into the molding space 10 and keep the mold material under this pressure until it has solidified. A channel 12 runs for this sake from the injector 11 and into the mould 7. Polyethene in molten state is in the present case intended to be supplied to the mould in this way. The advantage of supplying the polyethene with this high pressure and let it solidify from molten state under such a pressure is that molecule chains forming it may be straightened out with comparatively improved physical properties as a consequence. However, this high pressure means in the normal case unreasonably high stresses upon the mould, since the mold material will try to press the two parts 8, 9 of the mould apart, so that such a mould normally may not manage more than a few molding cycles before it has to be thrown away as a consequence of defects thereof. This is particularly valid when molding more complicated details. However, this problem is in the device according to the present invention solved by ensuring that the mould 7 gets isostatically balanced during the very molding by giving a medium filling the chamber 4, which preferably is fluid and advantageous oil, a high pressure influencing the mould from all sides and having substantially the same magnitude as the pressure to which the mold material is exposed to during the molding. It is then important that the mould 7 is so arranged in the pressure chamber 4 that said medium is able to surround and act upon the mould from all directions, in which the mould may nevertheless be arranged for substantially bearing against the upper lid 3, such as shown in the figure, but the surfaces of the lid and/or the mould may then be provided with roughnesses or the like so as to ensure that the medium may reach inside therebetween. According to a very advantageous alternative rubber or any other elastomer arranged as medium at least closest to the mould, and a fluid medium, such as oil, could fill out the rest of the chamber. The mould is by this kept dry and gets easier and more nicely to handle when taken out of the chamber.

More exactly, the device has means for generating a required pressure inside the chamber 4, and these means comprise a member 13 adapted to supply a medium under high pressure to a closed room 14 for influencing a large surface 15 of a piece 17 projecting into the chamber 4 with a smaller opposite surface 16 for obtaining a power amplification. The piece 17 may in this way be brought to move to the inner of the the pressure chamber 4 reducing the volume thereof and by that increasing the pressure of the medium located therein. It is schematically illustrated that the device also comprises means 18 adapted to register the pressure by which the means 11 supply the mold material to the molding space 10 and on the basis of this pressure information control the member 13 and by this said means to adjust the pressure of the medium in the chamber 4 depending upon the pressure in the molding space of the mould. It may by this be ensured that the pressure in the chamber is all the time perfectly adapted to the pressure prevailing for the moment in the molding space 10 for a desired isostatic balancing of the mould. However, it is possible in practice to chose to have a somewhat higher pressure inside the chamber than in the mould all the time so as to by that generate forces contributing to the unity of the mould.

The device is also provided with an arrangement 19 adapted to control the temperature of the mould in function of the time the mold material has been present in said molding space, and the arrangement has for this sake means 20 schematically indicated for heating the mould and in this way also the mold material located therein for prolonging the staying time of this material in the molding space before the solidification thereof into said object takes place. It will in this way be possible to ensure that, should this be desired, it takes a comparatively long time before the temperature of the mold material sinks that much that the solidification starts, in the case that the material has such a nature that it takes a comparatively long time for molecule chains included therein to be straightened out to a satisfying extent.

Once the molding has been terminated the mould 7 may be "demolded" by lifting the lid 3 and pivot it away, such as indicated through the arrows 21, 22.

Thanks to the isostatic balancing of the mould during the molding of objects under a high pressure according to the invention it will be possible to also for molding complicated details use simple moulds of a low cost and of such a material that has not to be particularly strong, and nevertheless use these during many cycles.

As already mentioned above, objects of all types of materials may be molded in this way, in which it, however, directly may be said that the device is very well suited for molding details of plastic material and metals and metal alloys, especially details of aluminium, for example for turbine blades for aircrafts, where very high demands are put on the physical properties and the life time.

The invention is of course not in any way restricted to the preferred embodiments described above, but many possibilities to modifications thereof would be apparent to a man skilled in the art without departing from the basic idea of the invention as defined in the claims.

It would for example be possible that the level of the pressures used is another than described above, but the invention is however particularly well suited for pressures exceeding 2 000 bars and preferably 5 000 bars.

The heating of the very mould could take place in another way, for example by arranging heating elements in the chamber or inside or outside the walls 1 restricting it.

With respect to registration of the pressure of the mold material in the mould this could take place directly at the very supply means, such as shown in the drawing, but it would of course also be possible to arrange a pressure sensor at another location closer to the mould.

The claim definition "means adapted to register the pressure in the molding space of the mould during the molding and control said means to adjust the pressure of the medium in the chamber depending upon the pressure in the molding space of the mould" is to be given a very general meaning and comprises also the case in which the members supplying the mold material to the mould under a high pressure and generating the high pressure of the mould surrounding the medium are formed by one single pressure source in common, such as an hydraulic source, which may be connected to a separate pressure multiplicator for the molding material and the medium. The pressure of the medium may in this way be adapted to that of the mold material.

The pressure multiplicator for the medium could very well, contrary to what has been shown in the figure, be located outside the very "press frame".

## Claims

1. A method for molding objects, in which a fluid mold material is under a pressure being high with respect to the atmospheric pressure supplied to a molding space (10) enclosed in a mould (7) and is kept under this high pressure during solidification there, ***characterized* in that** a medium surrounding the mould during the molding is brought to a high pressure of substantially the same magnitude as the pressure to which the mold material is excerted during the molding acting upon the mould from all sides so as to isostatically substantially balance forces acting upon the mould through the molding material and said medium.

2. A method according to claim 1, ***characterized* in that** the pressure in the molding space (10) of the mould is registered and the pressure of said medium is adjusted in dependence of the pressure in the molding space of the mould.

3. A method according to claim 1 or 2, ***characterized* in that** it is carried out for a mould (7) being formed by a plurality of separable parts (8, 9), and that said medium is brought to a pressure being slightly higher than the pressure of the mold material in the molding space (10) during the molding so as to assist in keeping said parts of the mould together.

4. A method according to any of claims 1-3, ***characterized* in that** a molten plastic material is injected into the molding space of the mould through said high pressure for molding an object.

5. A device for molding objects, which comprises a mould (7) having a molding space (10) enclosed therein and adapted to be filled by a fluid molding material intended to solidify therein as well as members (11, 12) adapted to supply said molding material under a pressure being high with respect to the atmospheric pressure to the molding space for solidification thereof under this high pressure, ***characterized* in that** the device also comprises a chamber (4) adapted to receive the mould during the molding and means (13-17) adapted to generate a high pressure of substantially the same magnitude as the pressure excerted to the molding material during the very molding of a medium filling the chamber so as to isostatically substantially balance the mould through the molding material and said forces acting upon said medium.

6. A device according to claim 5, ***characterized* in that** it comprises members (18) adapted to register the pressure in the molding space (10) of the mould during the molding and control said means to adjust the pressure of the medium in the chamber (4) depending upon the pressure in the molding space of the mould.

7. A device according to claim 5 or 6, ***characterized* in that** the mould (7) is formed by a plurality of separable parts (8, 9), and that said means are adapted to generate a pressure of said medium in the chamber, which is slightly higher than the pressure of the molding material in the molding space (10) during the molding, so as to support the sticking of said parts of the mould to each other during the molding.

8. A device according to any of claims 5-7, ***characterized* in that** said members (11, 12) are adapted to supply a plastic material in a molten state under said high pressure to the molding space.

9. A device according to claim 8, ***characterized* in that** said members (11, 12) are adapted to supply polyethene in molten state to said molding space under said high pressure for molding an object.

10. A device according to any of claims 5-9, ***characterized* in that** said members (11, 12) are adapted to supply said molding material under a pressure exceeding 2 000 bars.

11. A device according to claim 10, ***characterized* in that** said members (11, 12) are adapted to supply said molding material to the molding space of the mould under a pressure exceeding 5 000 bars.

12. A device according to any of claims 5-7, 10 or 11, ***characterized* in that** said members (11, 12) are adapted to feed a metal or a metal alloy in a molten state to the molding space of the mould under a high pressure for molding an object.

13. A device according to claim 12, ***characterized* in that** said members (11, 12) are adapted to supply aluminium in a molten state under high pressure to the molding space for molding an object.

14. A device according to any of claims 5-13, ***characterized* in that** said means (13-17) are adapted to ensure a high pressure of a fluid medium filling the chamber (4).

15. A device according to claim 14, ***characterized* in that** said medium is oil.

16. A device according to any of claims 5-13, ***characterized* in that** said means (13-17) are adapted to ensure a high pressure of an elastomer forming said first medium, said elastomer surrounding the mould of the chamber.

17. A device according to claim 16, ***characterized* in that** the chamber has a second part forming the entire chamber (4) together with said part and adapted to receive a second said medium in fluid state.

18. A device according to any of claims 5-17, ***characterized* in that** said means (13-17) are adapted to generate said high pressure in said chamber (4) by reducing the volume of the chamber and by that make the medium more compact.

19. A device according to any of claims 5-18, ***characterized* in that** it has an arrangement (19-20) adapted to control the temperature of the molding material supplied to the molding space (10) of the mould under high pressure in function of the time said molding material has been located in said molding space.

20. A device according to claim 19, ***characterized* in that** said arrangement has means (20) for directly or indirectly heat the mould (7) for prolonging the time in which said molding material is in said moulding space (10) before solidification thereof to said object is taken place.

## Patentansprüche

1. Verfahren zum Formen von Objekten, wobei ein fluides Formmaterial unter einem Druck, der in Bezug auf den atmosphärischen Druck hoch ist, einem Formraum (10) zugeführt wird, der in einer Form (7) eingeschlossen ist, und während der Verfestigung dort unter diesem hohen Druck gehalten wird, **dadurch gekennzeichnet, dass** ein Medium, das die Form während des Formens umgibt, auf einen hohen Druck mit im Wesentlichen der gleichen Größe wie der Druck gebracht wird, dem, das Formmaterial während des Formens ausgesetzt wird, und der auf die Form von allen Seiten wirkt, um isostatisch im Wesentlichen Kräfte auszugleichen, die über das Formmaterial und das Medium auf die Form wirken.

2. Verfahren nach Anspruch 1, **dadurch gekennzeichnet, dass** der Druck in dem Formraum (10) der Form erfasst wird und der Druck des Mediums in Abhängigkeit von dem Druck in dem Formraum der Form reguliert wird.

3. Verfahren nach Anspruch 1 oder 2, **dadurch gekennzeichnet, dass** es für eine Form (7) ausgeführt wird, die durch eine Vielzahl trennbarer Teile (8, 9) gebildet wird, und dass das Medium auf einen Druck gebracht wird, der geringfügig höher ist als der Druck des Formmaterials in dem Formraum (10) während des Formens, um so unterstützend beim Zusammenhalten der Teile der Form zu wirken.

4. Verfahren nach einem der Ansprüche 1-3, **dadurch gekennzeichnet, dass** ein geschmolzenes Kunststoffmaterial durch den hohen Druck zum Formen eines Objektes in den Formraum der Form eingespritzt wird.

5. Vorrichtung zum Formen von Objekten, die eine Form (7) mit einem Formraum (10), der darin eingeschlossen und so eingerichtet ist, dass er mit einem fluiden Formmaterial gefüllt wird, das sich darin verfestigen soll, sowie Elemente (11, 12) umfasst, die so eingerichtet sind, dass sie das Formmaterial unter einem Druck, der in Bezug auf den atmosphärischen Druck hoch ist, dem Formhohlraum zur Verfestigung desselben unter diesem hohen Druck zuführen, **dadurch gekennzeichnet, dass** die Vorrichtung des Weiteren eine Kammer (4), die so eingerichtet ist, dass sie die Form während des Formens aufnimmt, und eine Einrichtung (13-17) umfasst, die so eingerichtet ist, dass sie einen hohen Druck eines Mediums, das die Kammer füllt, mit im Wesentlichen derselben Größe wie der Druck erzeugt, der auf das Formmaterial während des eigentlichen Formens ausgeübt wird, um isostatisch im Wesentlichen die Form über das Formmaterial und die Kräfte, die auf das Medium wirken, ins Gleichgewicht zu bringen.

6. Vorrichtung nach Anspruch 5, **dadurch gekennzeichnet, dass** sie Elemente (18) umfasst, die so eingerichtet sind, dass sie den Druck in dem Formraum (10) der Form während des Formens erfassen und die Einrichtung steuern, um den Druck des Mediums in der Kammer (4) in Abhängigkeit von Druck in dem Formraum der Form zu regulieren.

7. Vorrichtung nach Anspruch 5 oder 6, **dadurch gekennzeichnet, dass** die Form (7) durch eine Vielzahl trennbarer Teile (8, 9) gebildet wird, und dass die Einrichtung so eingerichtet ist, dass sie einen Druck des Mediums in der Kammer erzeugt, der geringfügig höher ist als der Druck des Formmaterials in dem Formraum (10) während des Formens, um so das Aneinanderhaften der Teile der Form während des Formens zu unterstützen.

8. Vorrichtung nach einem der Ansprüche 5-7, **dadurch gekennzeichnet, dass** die Elemente (11, 12) so eingerichtet sind, dass sie ein Kunststoffmaterial in einem geschmolzenen Zustand unter dem hohen Druck dem Formraum zuführen.

9. Vorrichtung nach Anspruch 8, **dadurch gekennzeichnet, dass** die Elemente (11, 12) so eingerichtet sind, dass sie dem Formraum Polyethylen in geschmolzenem Zustand unter dem hohen Druck zum Formen eines Objektes zuführen.

10. Vorrichtung nach einem der Ansprüche 5-9, **dadurch gekennzeichnet, dass** die Elemente (11, 12) so eingerichtet sind, dass sie das Formmaterial unter einem Druck zuführen, der 2000 bar übersteigt.

11. Vorrichtung nach Anspruch 10, **dadurch gekennzeichnet, dass** die Elemente (11, 12) so eingerichtet sind, dass sie das Formmaterial dem Formraum der Form unter einem Druck zuführen, der 5000 bar übersteigt.

12. Vorrichtung nach einem der Ansprüche 5-7, 10 oder 11, **dadurch gekennzeichnet, dass** die Elemente (11, 12) so eingerichtet sind, dass sie dem Formraum der Form ein Metall oder eine Metalllegierung in einem geschmolzenen Zustand unter einem hohen Druck zum Formen eines Objektes zuführen.

13. Vorrichtung nach Anspruch 12, **dadurch gekennzeichnet, dass** die Elemente (11, 12) so eingerichtet sind, dass sie dem Formraum Aluminium in einem geschmolzenen Zustand unter hohem Druck zum Formen eines Objektes zuführen.

14. Vorrichtung nach einem der Ansprüche 5-13, **dadurch gekennzeichnet, dass** die Einrichtung (13-17) so eingerichtet ist, dass sie einen hohen Druck eines fluiden Mediums gewährleistet, das die Kammer füllt.

15. Vorrichtung nach Anspruch 14, **dadurch gekennzeichnet, dass** das Medium Öl ist.

16. Vorrichtung nach einem der Ansprüche 5-13, **dadurch gekennzeichnet, dass** die Einrichtung (13-17) so eingerichtet ist, dass sie einen hohen Druck eines Elastomers, der das erste Medium bildet, gewährleistet, wobei das Elastomer die Form der Kammer umgibt.

17. Vorrichtung nach Anspruch 16, **dadurch gekennzeichnet, dass** die Kammer einen zweiten Teil aufweist, der die gesamte Kammer (4) zusammen mit dem Teil bildet und so eingerichtet ist, dass er ein zweites Medium in fluidem Zustand aufnimmt.

18. Vorrichtung nach einem der Ansprüche 5-17, **dadurch gekennzeichnet, dass** die Einrichtung (13-17) so eingerichtet ist, dass sie den hohen Druck in der Kammer (4) erzeugt, indem sie das Volumen der Kammer verringert und damit das Medium kompakter macht.

19. Vorrichtung nach einem der Ansprüche 5-18, **dadurch gekennzeichnet, dass** sie eine Anordnung (19-20) aufweist, die so eingerichtet ist, dass sie die Temperatur des Formmaterials, das dem Formraum (10) der Form unter hohem Druck zugeführt wird, in Abhängigkeit von der Zeit steuert, über die sich das Formmaterial in dem Formraum befunden hat.

20. Vorrichtung nach Anspruch 19, **dadurch gekennzeichnet, dass** die Anordnung eine Einrichtung (20) aufweist, die die Form (7) direkt oder indirekt erwärmt, um die Zeit zu verlängern, während der sich das Formmaterial in dem Formraum (10) befindet, bevor Verfestigung desselben zu dem Objekt stattfindet.

## Revendications

1. Procédé de moulage d'objets, dans lequel une matière à mouler fluide est envoyée sous une pression haute par rapport à la pression atmosphérique à un espace (10) de moulage entouré d'un moule (7) et y est maintenue sous la haute pression pendant la solidification, **caractérisé en ce qu'**un milieu entourant le moule pendant le moulage est mis à une haute pression ayant sensiblement la même valeur que la pression à laquelle la matière à mouler est soumise pendant le moulage en agissant sur le moule de tous côtés, de manière à équilibrer de façon sensiblement isostatique des forces agissant sur le moule par l'intermédiaire de la matière à mouler et du milieu.

2. Procédé suivant la revendication 1, **caractérisé en ce que** la pression dans l'espace (10) de moulage du moule est enregistrée et la pression du milieu est ajustée en fonction de la pression dans l'espace de moulage du moule.

3. Procédé suivant la revendication 1 ou 2, **caractérisé en ce qu'**il est effectué pour un moule (7) formé d'une pluralité de parties (8, 9) pouvant être séparées et **en ce que** le milieu est mis à une pression légèrement supérieure à la pression de la matière à mouler dans l'espace (10) de moulage pendant le moulage, de manière à ce que le maintien ensemble des parties du moule soit facilité.

4. Procédé suivant l'une quelconque des revendications 1 à 3, **caractérisé en ce qu'**une matière plastique fondue est injectée dans l'espace de moulage du moule par l'intermédiaire de la haute pression pour mouler un objet.

5. Dispositif de moulage d'objets, qui comprend un moule (7) ayant un espace (10) de moulage qui en est entouré et qui est conçu pour être empli d'une matière à mouler fluide destinée à s'y solidifier, ainsi que des éléments (11, 12) destinés à alimenter en la matière à mouler sous une pression plus grande que la pression atmosphérique l'espace de moulage en vue de la solidifier sous cette haute pression, **caractérisé en ce que** le dispositif comprend aussi une chambre (4) destinée à recevoir le moule pendant le moulage et des moyens (13 à 17) destinés à engendrer une haute pression ayant sensiblement la même valeur que la pression appliquée à la matière à mouler pendant le moulage proprement dit par un milieu emplissant la chambre, de manière à sensiblement équilibrer de façon isostatique le moule par l'intermédiaire de la matière à mouler et des forces agissant sur le milieu.

6. Dispositif suivant la revendication 5, **caractérisé en ce qu'**il comprend des éléments (18) destinés à enregistrer la pression dans l'espace (10) de moulage du moule pendant le moulage et à commander les moyens d'ajustement de la pression du milieu dans la chambre (4) en fonction de la pression dans l'espace de moulage du moule.

7. Dispositif suivant la revendication 5 ou 6, **caractérisé en ce que** le moule (7) est formé d'une pluralité de parties (8, 9) qui peuvent être séparées, et **en ce que** les moyens sont destinés à engendrer une pression du milieu dans la chambre qui est légèrement supérieure à la pression de la matière à mouler dans l'espace (10) de moulage pendant le moulage, de manière à faciliter l'adhérence des parties du moule l'une à l'autre pendant le moulage.

8. Dispositif suivant l'une quelconque des revendications 5 à 7, **caractérisé en ce que** les éléments (11, 12) sont destinés à l'alimentation de l'espace de moulage en une matière plastique à l'état fondu sous haute pression.

9. Dispositif suivant la revendication 8, **caractérisé en ce que** les éléments (11, 12) sont destinés à alimenter l'espace de moulage en polyéthylène à l'état fondu sous haute pression pour le moulage d'un objet.

10. Dispositif suivant l'une quelconque des revendications 5 à 9, **caractérisé en ce que** les éléments (11, 12) sont destinés à l'alimentation de la matière à mouler sous une pression dépassant 2000 bars.

11. Dispositif suivant la revendication 10, **caractérisé en ce que** les éléments (11, 12) sont destinés à alimenter l'espace de moulage du moule en la matière à mouler sous une pression dépassant 5000 bars.

12. Dispositif suivant l'une quelconque des revendications 5 à 7, 10 ou 11, **caractérisé en ce que** les éléments (11, 12) sont destinés à charger un métal ou un alliage métallique à l'état fondu dans l'espace de moulage du moule sous une haute pression pour mouler un objet.

13. Dispositif suivant la revendication 12, **caractérisé en ce que** les éléments (11, 12) sont destinés à alimenter l'espace de moulage en aluminium à l'état fondu sous haute pression pour mouler un objet.

14. Dispositif suivant l'une quelconque des revendications 5 à 13, **caractérisé en ce que** les moyens (13 à 17) sont destinés à assurer une haute pression d'un milieu fluide emplissant la chambre (4).

15. Dispositif suivant la revendication 14, **caractérisé en ce que** le milieu est de l'huile.

16. Dispositif suivant l'une quelconque des revendications 5 à 13, **caractérisé en ce que** les moyens (13 à 17) sont destinés à assurer une haute pression d'un élastomère formant le premier milieu, cet élastomère entourant le moule de la chambre.

17. Dispositif suivant la revendication 16, **caractérisé en ce que** la chambre a une deuxième partie formant la chambre (4) dans son entier ensemble avec ladite partie et destinée à recevoir un second milieu à l'état fluide.

18. Dispositif suivant l'une quelconque des revendications 5 à 17, **caractérisé en ce que** les moyens (13 à 17) sont destinés à engendrer la haute pression dans la chambre (4) en réduisant le volume de la chambre et en rendant ainsi le milieu plus compact.

19. Dispositif suivant l'une quelconque des revendications 5 à 18, **caractérisé en ce qu'**il a un agencement (19-20) destiné à se rendre maître de la température de la matière à mouler envoyée à l'espace (10) de moulage du moule sous haute pression en fonction du temps pendant lequel la matière à mouler a été placée dans l'espace de moulage.

20. Dispositif suivant la revendication 19, **caractérisé en ce que** l'agencement a des moyens (20) de chauffage direct ou indirect du moule (7) afin de prolonger la durée pendant laquelle la matière à mouler est présente dans l'espace (10) de moulage avant que sa solidification en l'objet ait eu lieu.
